Europäisches Patentamt

European Patent Office

Office européen des brevets

(11) Publication number: **0 411 637 A1**

# EUROPEAN PATENT APPLICATION

(21) Application number: 90114872.6

(22) Date of filing: 02.08.90

(51) Int. Cl.5: **C02F 7/00, F03B 13/24, F03B 13/18**

(30) Priority: 02.08.89 IT 6766589
07.08.89 IT 6769089

(43) Date of publication of application:
06.02.91 Bulletin 91/06

(84) Designated Contracting States:
AT BE CH DE DK ES FR GB GR IT LI LU NL SE

(71) Applicant: **Fretta, Severino**
**Via Torino; 78**
**I-10040 Givoletto, Torino(IT)**

(72) Inventor: **Fretta, Severino**
**Via Torino; 78**
**I-10040 Givoletto, Torino(IT)**

(74) Representative: **Aprà, Andrea, Dipl.-Ing. Dr.**
**jur. et al**
**Via Cernaia 27**
**I-10121 Torino(IT)**

(54) **Automatic apparatus for aerating and purifying sea-water.**

(57) Automatic apparatus for aerating and purifying sea-water, comprising at least one reciprocating pneumatic compressor (11), comprising a member (12) which is sealingly movable with reciprocating motion in a pneumatic cylinder (13) sealingly connected, at the suction, to at least one atmospheric air intake (14,15) and, at the delivery, to at least one discharge tube (16) immersed in the water to be aerated, for the forcible introduction into said water of pressurized air, and also an oscillating arm (19) which drives the movable member (12) of said at least one pneumatic compressor (11), operating in the manner of a lever pivoted on a pin (19.1) the position of which is fixed with respect to said at least one pneumatic compressor and integral in oscillation with at least one float (20) arranged on the free surface of said water and linked to said drive arm (19), in such a way that, following the wave motion of the water to be aerated, said at least one float (20) is moved alternately up and down and said drive arm (19) is therefore made to oscillate in opposing directions about its pin (19.1), drawing said movable member (12) and moving it in the corresponding pneumatic cylinder (13) with reciprocating motion and thus automatically and continuously causing atmospheric air to be drawn into said at least one pneumatic compressor and the same to be forcibly introduced into the water to be aerated.

Fig. 1

## AUTOMATIC APPARATUS FOR AERATING AND PURIFYING SEA WATER

The present invention relates to an automatic apparatus for aerating and purifying sea-water.

As is known, the eutrophication of sea-water constitutes a grave ecological problem, in particular for marine fauna, which loses vital oxygen, and because of the adverse effects this phenomenon has on bathing.

In order to remedy this situation, eutrophic water has to be continually aerated and purified (by means of oxygenation).

The means currently employed for this purpose, however, are inadequate, inefficient and very expensive.

The main object of the present invention is to provide an automatic apparatus for aerating and purifying sea-water, by which the problem of the eutrophication of sea-water can be efficiently solved, at least in part, with means which are structurally simple, operate continuously and are of low cost both in manufacture and in use.

A further object is to provide an automatic apparatus as specified which is safe and reliable in operation and highly efficient.

In view of these objects, the present invention provides an automatic apparatus for aerating and purifying sea-water, whose essential feature forms the subject of Claim 1.

Further advantageous features will emerge from the subclaims.

The present invention will emerge even more clearly from the detailed description which follows of a number of illustrative embodiments thereof, and with reference to the attached drawings which are provided purely by way of non-limiting exemplification, in which:

- Fig. 1 is a diagrammatic view in elevation of the automatic apparatus for aerating and purifying sea-water according to the invention, in a first illustrative embodiment thereof, in which the said apparatus is supported on a fixed point, such as for example a jetty or suchlike structure;
- Fig. 2 is a similar view to that of Fig. 1, showing however an alternative embodiment;
- Fig. 3 is a diagrammatic view in elevation of another embodiment of the apparatus according to the invention, supported in a position which is fixed with respect to the sea bottom and in which a pair of pneumatic compressors operate "in tandem", in opposition; - Fig. 4 is a similar view to that of Fig. 3, in which however a pair of pneumatic compressors are provided which operate "in tandem", in phase;
- Fig. 5 is a diagrammatic view in elevation of the automatic apparatus for aerating and purifying sea-water according to the invention, in a fourth illustrative embodiment thereof, in which the said apparatus is supported by means of a floating platform;
- Fig. 6 is a similar view to that of Fig. 5, in which however the apparatus according to the invention is supported on a fixed point, such as for example a jetty or suchlike structure.

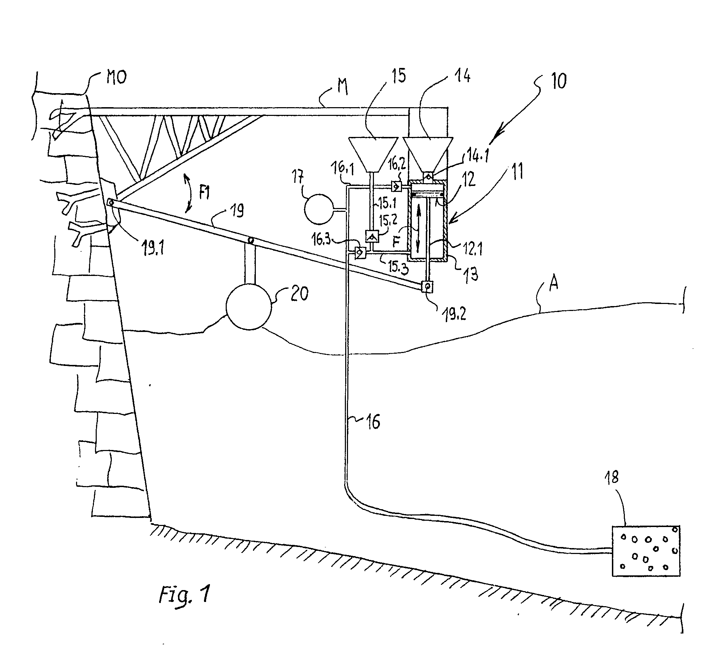

With reference first of all to Fig. 1,'10 indicates as a whole the automatic apparatus for aerating and purifying sea-water according to a first illustrative embodiment of the invention. M indicates a support bracket for the apparatus 10 in a suspended position with respect to sea-water A to be aerated and purified. The bracket M juts out for example from a jetty or suchlike structure MO.

The apparatus 10 comprises a reciprocating pneumatic compressor 11 fixed to and suspended from the bracket M. Said compressor 11 has a discoidal piston 12, sealingly slideable with reciprocating motion in a pneumatic cylinder 13, of substantially vertical axis. The arrow F indicates the opposing directions of the axial sliding of the piston 12. 12.1 indicates a piston rod. Said compressor 11 has the structure of a double-acting suction-and-force pump.

The compressor 11 is sealingly connected, at the suction, to two atmospheric air intakes, 14 and 15 respectively. The air intake 14 communicates via a check valve 14.1 directly with the pneumatic cylinder 13. The air intake 15 is connected to said cylinder 13 via a suction duct 15.1, a check valve 15.2 and a suction/delivery duct 15.3. The check valves 14.1, 15.2 allow only atmospheric air to be drawn in.

Furthermore said compressor 11 is sealingly connected, at the delivery, to a discharge tube 16 immersed in the sea-water A which is to be aerated. Specifically, a first chamber of said compressor 11 is sealingly connected to the tube 16 by means of a discharge duct 16.1 with a check valve 16.2 interposed, while the other chamber of said compressor is sealingly connected to said tube 16 by means of the suction/delivery duct 15.3 and a check valve 16.3. Said check valves 16.2, 16.3 allow only pressurized air to flow out.

17 indicates a pressurized air receiver, on a branch sealingly connected to said tube 16, to keep an even flow of pressurized air through said tube 16.

18 indicates a porous or microperforated body, connected to the discharge mouth of the discharge tube 16 and acting as a divider of the flow of pressurized air discharging from the tube 16, which is thus broken up into a plurality of microbubbles.

The apparatus 10 further comprises a rod-shaped oscillating arm 19 which drives the piston 12 of the compressor 11. Said oscillating arm 19 is pivoted at one of its ends to the structure of the bracket M by means of a pin 19.1 the position of which is fixed with respect to the compressor 11. Said oscillating arm 19 is articulated at its opposite end area, at 19.2, with respect to said piston 12, by means of the piston rod 12.1.

Furthermore, said oscillating arm 19 is integral in oscillation with a float 20, arranged on the free surface of the water A and linked to said arm in an intermediate position between the pin 19.1 and that end 19.2 of said arm which is articulated to the piston 12. Said float 20 consists for example of a block of expanded polystyrene.

The arrow F1 indicates the opposing directions of the oscillation of the arm 19 around the pin 19.1.

The above arrangement is advantageous for creating high pressures in the compressor 11, even with moderately low waves.

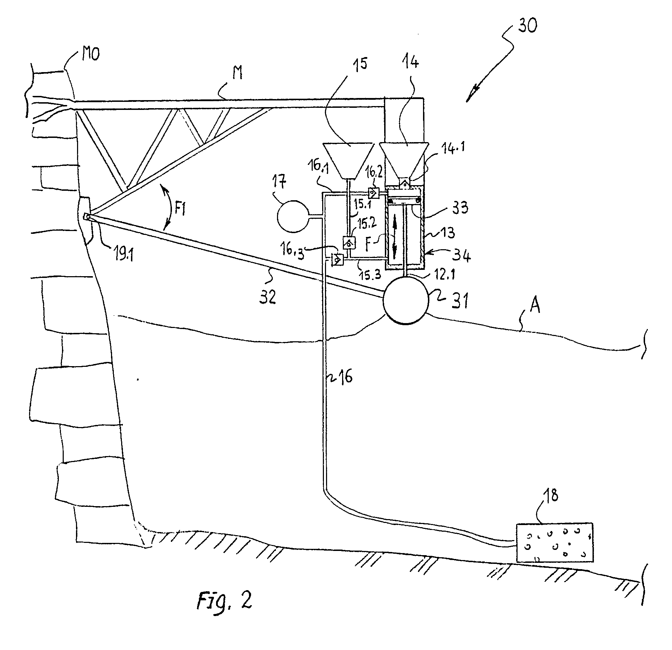

Fig. 2 shows an automatic apparatus 30 for aerating and purifying sea-water which is substantially similar to the apparatus 10 described above. As an alternative, in the apparatus 30 a float 31 is linked to an oscillating drive arm 32, at an end area of said arm (not visible in the drawings), which area is articulated to a piston 33 of a pneumatic compressor 34. The above arrangement is advantageous for creating moderate pressures in the compressor 34, even with moderately low waves.

For the remainder, reference should be made to the description given above of the apparatus 10, the remaining parts of said Figure 2 being similar in structure and function to those shown in Fig. 1 and marked with the same reference numerals.

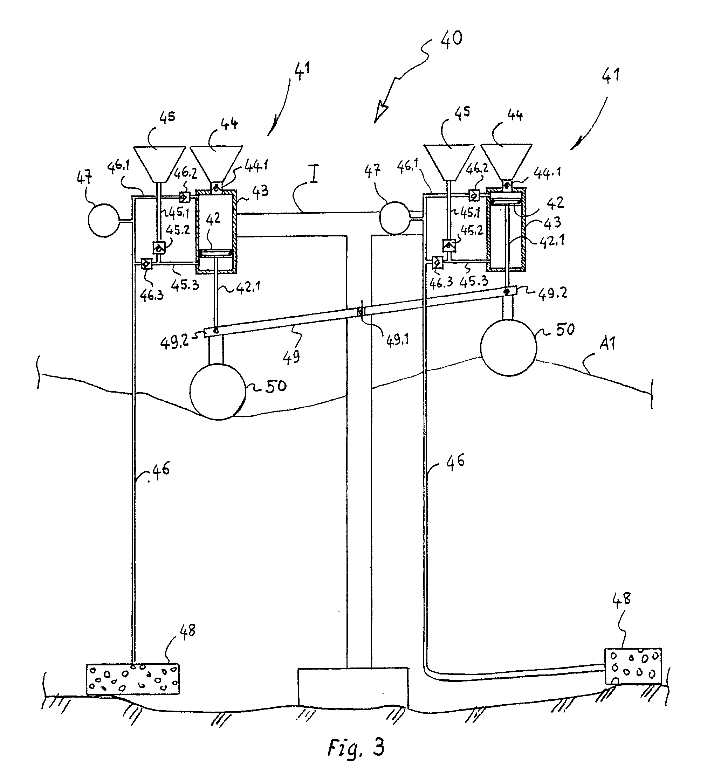

Referring now to Fig. 3, 40 indicates as a whole the automatic apparatus for aerating and purifying seawater in a second illustrative embodiment of the invention.

I indicates a substantially T-shaped support frame, anchored stably to the sea bottom. At the end areas of the horizontal arm of said frame I respective reciprocating pneumatic compressors 41 are fixed, these being identical to each other.

Each compressor 41 has a discoidal piston 42, sealingly slideable with reciprocating motion in a pneumatic cylinder 43, of substantially vertical axis. 42.1 indicates its respective piston rod. Said compressors 41 have a similar structure to that of the compressor 10 according to Fig. 1. Analogously, each of them also has two atmospheric air intakes 44, 45 respectively, sealingly connected to the suction, and a discharge tube 46, sealingly connected to the delivery and immersed in the water to be aerated A1.

For each pneumatic compressor 41, the arrangement of the ducts and check valves for the suction is the following: from the air intake 44 to the cylinder 43 via a check valve 44.1; from the air intake 45 to the cylinder 43 via a duct 45.1, a check valve 45.2 and a duct 45.3.

The arrangement of the ducts and check valves for the delivery is the following: from one chamber of the cylinder 43 to the tube 46 via a duct 46.1 with an interposed check valve 46.2; from the other chamber of the cylinder 43 to the tube 46 via the duct 45.3 and a check valve 46.3.

47 indicates a pressurized air receiver on a branch sealingly connected to the discharge tube 46. 48 indicates a porous or microperforated body connected to the discharge mouth of each tube 46.

For an explanation of the working of said parts the account given with reference to the first embodiment (Fig. 1) should be referred to.

The apparatus 40 further comprises a rod-shaped oscillating arm 49 which drives the pistons 42 of the two pneumatic compressors 41. Said oscillating arm 49 is pivoted at the mid-point like the beam of a pair of scales, on a pin 49.1 the position of which is fixed with respect to said compressors, on the vertical shaft of the frame 1. Said oscillating arm 49 is articulated at each of its two end areas 49.2 to a corresponding piston 42 of a respective pneumatic compressor 41, by means of a corresponding piston rod 42.1 for each piston.

Furthermore said oscillating arm 49 is integral in.oscillation with respect to two floats 50, arranged on opposite sides with respect to the pin 49.1. Each float 50 is linked to said arm 49 at a respective end area of said arm articulated to a corresponding piston 42 of a pneumatic compressor.

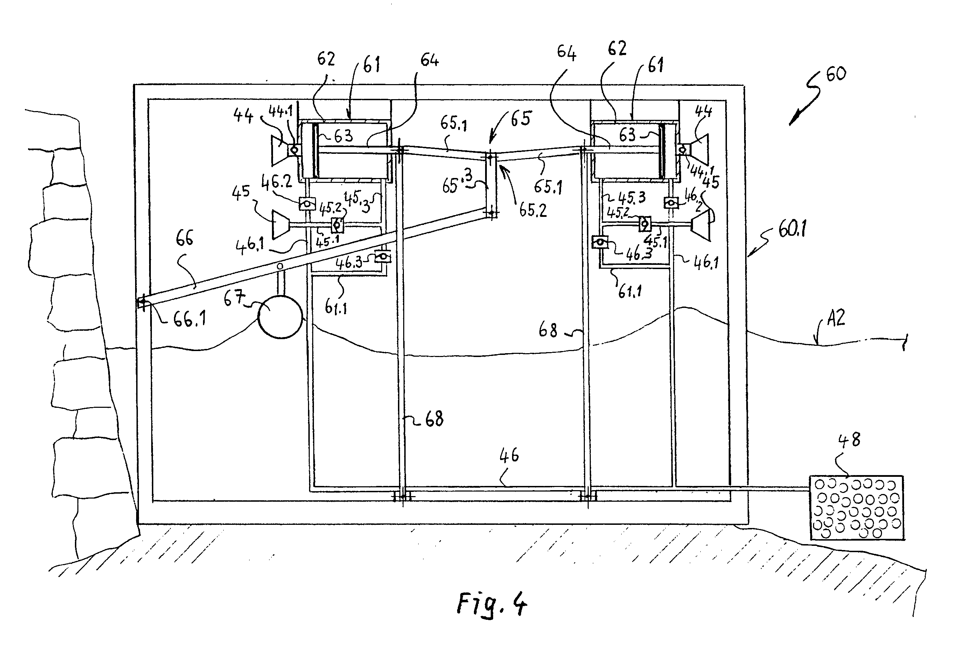

Referring now to Fig. 4, 60 indicates as a whole the apparatus according to the invention in a third illustrative embodiment thereof.

The apparatus 60 is accommodated in a cage-like frame 60.1 anchored stably to the sea bottom.

A pair of reciprocating pneumatic compressors 61 are suspended from the top crosspieces of said frame 60.1, in a position where they are out of the sea-water A2 which is to be aerated. Said compressors 61 have respective pneumatic cylinders 62 of substantially horizontal, and mutually coaxial, axis, with corresponding pistons 63 sealingly slideable in said cylinders and piston rods 64 reciprocally opposite each other and a certain distance apart.

The arrangement and structure of the pneumatic means for the suction and delivery of air, which are sealingly connected to the compressors 61, are substantially identical to those of the corresponding pneumatic means sealingly connected to the compressors 41 (Fig. 3), so the same means are not further described and are indicated here by the same reference numerals (it will however be noted that the ducts 46.1 and 45.3 are here interconnected by means of a further duct 61.1, while the two ducts 46.1 are on branches sealingly connected to a single discharge tube 46, in common, emerging at a single porous or microperforated body 48).

As an alternative, the pistons 63 of the compressor 61 are driven slideably in their respective pneumatic cylinders 62 "in tandem", in phase, by means of a single common drive mechanism in the manner of a double-toggle lever, indicated as a whole by 65.

Said double-toggle lever mechanism 65 essentially comprises a pair of rods 65.1 hinged together at one of their ends by means of a hinge 65.2, each being articulated at its other end to the free end of a corresponding piston rod 64. Said rods 65.1 are further connected to an oscillating arm 66, by means of a common link 65.3 which is also hinged at 65.2 and articulated to a free end of the same oscillating arm 66. At its other end said oscillating arm 66 is pivoted by means of a pin 66.1 to an upright of the frame 60.1 Furthermore, said oscillating arm 66 carries a float 67 with which it is integral in oscillation, the float being linked in an intermediate position with respect to said arm. Also, two connecting rods 68 are hinged at one of their ends to the crosspieces of the base of the frame 60.1 and at the other of their ends to the articulation pin of a respective articulated couple formed by a rod 65.1 and piston rod 64.

The oscillating drive arms 19, 32, 49, 66 are further provided in order, by their oscillating movements, in a manner known per se, to drive means for generating electrical current (not shown), such as a dynamo for example, for powering electrical means, for example signalling lights (again not shown), arranged on the bracket M, on the jetty or suchlike MO or on the frame I, 60.1.

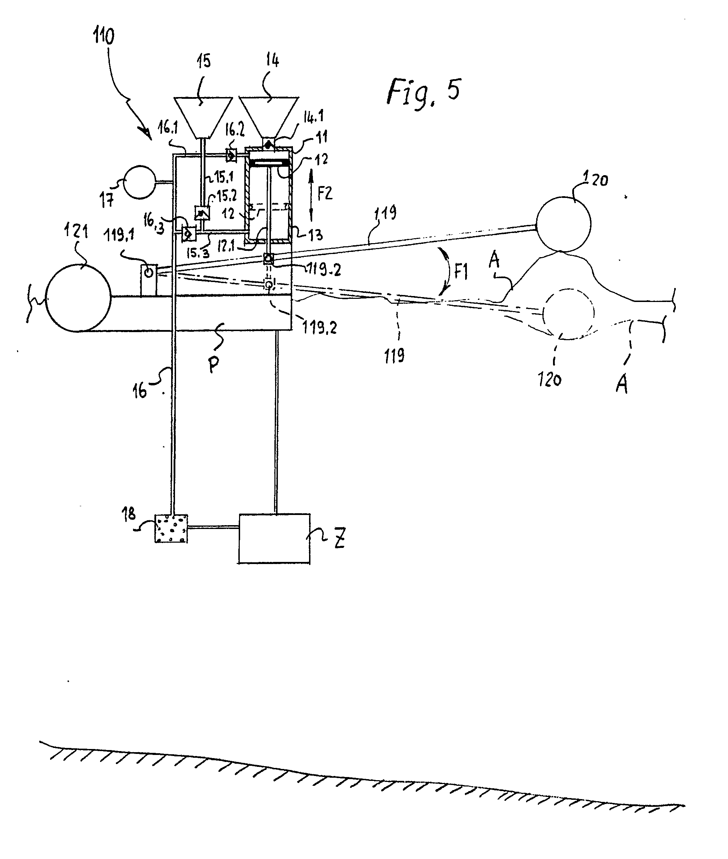

Referring now to Fig. 5, 110 indicates as a whole the automatic apparatus for aerating and purifying seawater. P indicates a floating platform supporting the apparatus 110 and Z a mass of ballast, to stabilize the platform P.

The apparatus 110 comprises a reciprocating pneumatic compressor fixed to the platform P and having an identical structure to that of the pneumatic compressor 11 of the apparatus 10 according to Fig. 1, and therefore indicated by the same reference numeral, as are also its parts and the pneumatic means for the suction and delivery of air sealingly connected to said pneumatic compressor.

The apparatus 110 further comprises a rod-shaped oscillating arm 119 which drives the piston 12 of the compressor 11. Said oscillating arm 119 is pivoted at one end to the platform P by means of a pin 119.1 the position of which is fixed with respect to the compressor 11. Integral with its other end is a float 120, consisting for example of a block of expanded polystyrene. Said oscillating arm 119 is articulated at an intermediate position, at 119.2, to said piston 12, by means of the piston rod 12.1.

121 indicates a counterfloat, linked to the platform P on the side thereof opposite that from which the arm 119 extends with the float 120. The function of the counterfloat 121 is to counterbalance forces applied to the platform P by the float 120 through the arm 119, with respect to the ballast Z.

The arrow F2 indicates the opposing directions of oscillation of the arm 119 about the pin 119.1.

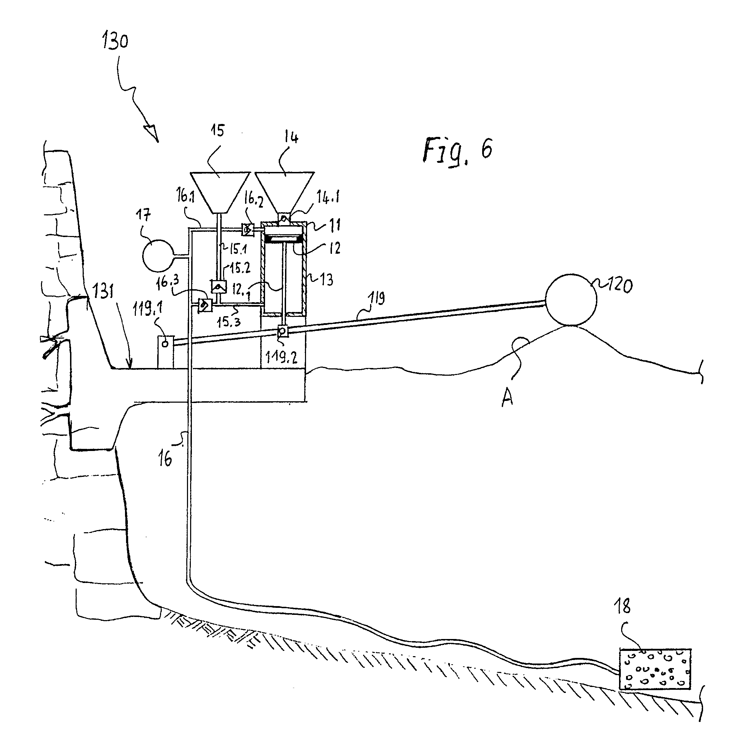

Fig. 6 shows an automatic apparatus 130 for aerating and purifying sea-water which is substantially similar to the apparatus 110 described above. As an alternative, the apparatus 130 is supported on a fixed point, such as for example on a jetty or suchlike structure M (sic), by means of a bracket support 131.

For the remainder, reference should be made to the description given above of the apparatus 110, those parts of said Figure 6 which are similar to those shown in Fig. 5 being marked with the same reference numerals. Operation:

The operation of the apparatus 10, 30 (Figs. 1, 2) according to the invention will be immediately understood:

Following the wave motion of the sea-water A to be aerated, the float 20, 31 is moved alternately up and down and the drive arm 19, 32 is made to oscillate in opposing directions (arrow FI) about the pin 19.1, drawing the piston 12, 33 via the articulated rod 12.1, and moving it sealingly inside the pneumatic cylinder 13 with reciprocating motion (arrow F).

When said piston 12, 33 is in the ascending phase, atmospheric air is drawn in through the air intake 15, the duct 15.1, the check valve 15.2 and the duct 15.3, while pressurized air is delivered through the duct 16.1, the check valve 16.2 and the discharge tube 16.

When the piston 12, 33 is in the descending phase in the cylinder 13, atmospheric air is drawn in through the air intake 14 and the check valve 14.1, while pressurized air is delivered through the duct 15.3, the check valve 16.3 and the discharge tube 16.

The porous or microperforated body 18 divides down into microbubbles the atmospheric air that is drawn in and emitted forcibly into the sea-water A. This optimizes the water aeration process. By means of the apparatus according to the invention this aeration process is effected automatically and continuously.

The operation of the apparatus 40 (Fig. 3) will also be clear from the above, with the following observations.

Following the wave motion of the sea-water A1 to be aerated and purified, the floats 50 are moved alternately up and down, in opposition.

Accordingly, the drive arm 49 is made to oscillate in opposing directions about the pin 49.1, drawing the pistons 42 articulated at its ends, via their corresponding rods 42.1, and moving them sealingly in their respective pneumatic cylinders 43, with reciprocating motion and in opposition to each other. In this way the two pneumatic compressors 41 operate "in tandem" with an increased aerating and purifying effect on the water A.

As for the working of the apparatus 60 (Fig. 4) this will be obvious from the above, bearing in mind that the two pneumatic compressors 61 operate as said "in tandem" and in phase. It will also be noted that given that the drive mechanism 65 has a double-toggle lever, forces applied to the piston 63 are proportionally increased over the forces applied to the hinge 65.2 via the oscillating arm 66, in such a way that said drive mechanism 65 acts as a force amplifier.

The working of the apparatuses 110 and 130 according to Figures 5 and 6 will be obvious from the above, and further description of them is therefore omitted.

Once installed, the apparatus according to the invention has a substantially zero operating cost. Given its remarkable structural simplicity it is virtually trouble-free.

Naturally, in practice, many alternatives will be applicable to what has been described and illustrated purely by way of non-limiting exemplification, without thereby departing from the scope of the invention and hence from the domain of the present industrial patent.

Thus, for example, instead of a piston compressor, a compressor having a structure in the manner of a diaphragm pump can be used instead.

## Claims

1. Automatic apparatus for aerating and purifying sea-water, characterized in that it comprises at least one reciprocating pneumatic compressor (11,34,41,61), comprising a member (12,33,42,63) which is sealingly movable with reciprocating motion in a pneumatic cylinder (13,43,62) sealingly connected, at the suction, to at least one atmospheric air intake (14,15;44,45) and, at the delivery, to at least one discharge tube (16,46) immersed in the water to be aerated, for the forcible introduction into said water of pressurized air, and also an oscillating arm (19,32,49,66,119) which drives the movable member (12,33,42,63) of said at least one pneumatic compressor (11,34,41,61), operating in the manner of a lever pivoted on a pin (19.1,49.1,66.1,119.1) the position of which is fixed with respect to said at least one pneumatic compressor and integral in oscillation with at least one float (20,31,50,67,120) arranged on the free surface of said water and linked to said drive arm (19, 32,49,66,119), in such a way that, following the wave motion of the water to be aerated, said at least one float (20,31,50,67,120) is moved alternately up and down and said drive arm (19,32,49,66,119) is therefore made to oscillate in opposing directions about its pin (19.1, 49.1,66.1,119.1), drawing said movable member (12,33,42, 63) and moving it in the corresponding pneumatic cylinder (13,43,62) with reciprocating motion and thus automatically and continuously causing atmospheric air to be drawn into said at least one pneumatic compressor and the same to be forcibly introduced into the water to be aerated.

2. Apparatus according to Claim 1, characterized in that said oscillating drive arm (19,32,49) is articulated at at least one (19.2,49.2) of its two end areas to the movable member (12,33,42) of at least one pneumatic compressor.

3. Apparatus according to Claim 1 and 2, characterized in that said oscillating drive arm (19) is pivoted at one of its end areas on a pin (19.1) the position of which is fixed with respect to said at least one pneumatic compressor (11), is articulated at the opposite end area (19.2) to the movable member (12) of at least one pneumatic compressor (11) and is integral in oscillation with at least one float (20) arranged on the free surface of the water to be aerated and linked to said oscillating drive arm (19) between said pin (19.1) and said end area (19.2) thereof articulated to said movable member (12).

4. Apparatus according to Claim 1 and 2, characterized in that said at least one float (31) is linked to said oscillating arm (32) at said end area of the said arm (32), which area is articulated to said movable member (33).

5. Apparatus according to Claim 1, characterized in that said oscillating drive arm (49) is pivoted at an intermediate position, preferably the mid-point, on a pin (49.1) the position of which is fixed with respect to at least two pneumatic compressors (41) arranged on opposite sides with respect to the same pin (49.1), is articulated at both of its two end areas (49.2) to the movable member (42) of at least one respective pneumatic compressor (41) and is integral in oscillation with at least two floats (50) which are arranged on opposite sides with respect to said pin (49.1) and each linked to said oscillating drive arm (49) between said pin (49.1) and a respective end area (49.2) of said arm.

6. Apparatus according to Claim 1 or 5, characterized in that each float (50) is linked to said oscillating arm at a respective end area (49.2) of said arm, which area is articulated to a corresponding movable member (42) of a pneumatic compressor.

7. Apparatus according to Claim 1, characterized in that it comprises at least one pair of compressors (61) having respective pneumatic cylinders (62) which are mutually coaxial, with corresponding pistons (63) sealingly slideable in said cylinders and piston rods (64) reciprocally opposite each other at a certain distance apart, and in that the pistons (63) of said compressors (61) are driven slideably in their respective pneumatic cylinders (62) "in tandem", by means of a single common drive mechanism in the manner of a double-toggle lever (65) with an oscillating drive arm (66) which is integral in oscillation with at least one float (67).

8. Apparatus according to Claim 7, characterized in that said mechanism (65) in the manner of a double-toggle lever comprises a pair of rods (65.1) hinged together at one of their ends by means of a hinge (65.2), each being articulated at its other end to she free end of a corresponding piston rod (64), said rods (65.1) being connected to an oscillating drive arm (66) with a float (67) by means of a common link (65.3) hinged (at 65.2) to said rods (65.1) and articulated to the same oscillating arm (66), while at one of its ends said oscillating arm (66) is pivoted by means of a pin (66.1) the position of which is fixed with respect to said compressors, two connecting rods (68) being hinged at one of their ends in a fixed position with respect to said compressors and at the other of their ends to the articulation pin of a respective articulated couple formed by a rod (65.1) and a piston rod (64).

9. Apparatus according to Claim 7 or 8, characterized in that said float (67) is linked to said oscillating arm (66) at an intermediate position on said arm.

10. Apparatus according to Claim 1, characterized in that said oscillating drive arm (119) is pivoted at one of its end areas by means of a pin (119.1) the position of which is fixed with respect to said at least one pneumatic compressor (11), carries at least one float (120) integral with its other end and is articulated at an intermediate position (at 119.2) to the movable member (12) of said at least one pneumatic compressor (11).

11. Apparatus according to Claim 1, characterized in that said compressor (11,34,41,61) has a structure in the manner of double-acting suction-and-force pump, with a discoidal piston (12,33,42,63) which is axially slideable in a pneumatic cylinder (13,43,62) and articulated, by means of a piston rod (12.1,42.1,64), to said drive arm (19,32,49,66,119).

12. Apparatus according to Claim 1, characterized in that said compressor has a structure in the manner of a diaphragm pump.

13. Apparatus according to Claims 1 or 11, characterized in that said pneumatic compressor (11,34,41,61) is sealingly connected, at the suction, to two atmospheric air intakes (14,15;44,45), in that one air intake (14,44) communicates via a check valve (14.1,44.1) directly with the pneumatic cylinder (13,43,62), while the other air intake (15,45) is connected to said cylinder (13,43,62) via a suction duct (15.1,45.1), a check valve (15.2, 45.2) and a suction/delivery duct (15.3,45.3), said check valves (14.1,15.2;44.1,45.2) allowing only atmospheric air to be drawn in, and in that said compressor (11,34,41,61) is sealingly connected, at the delivery, to a discharge tube (16,46) immersed in the sea-water which is to be aerated, through a first chamber of said compressor (11,34,41,61) which is sealingly connected to the tube (16,46) by means of a discharge duct (16.1,46.1), and an interposed check valve (16.2,46.2), while another chamber of said compressor is sealingly connected to said tube (16,46) by means of the suction/output duct (15.3,45.3) and a check valve (16.3,46.3), said check valves (16.2,16.3;46.2,46.3) allowing only pressurized air to be discharged.

14. Apparatus according to any one of the preceding claims, characterized in that it comprises a pressurized air receiver (17,47), on a branch sealingly connected to said at least one discharge tube (16,46), to keep an even flow of pressurized air through said same discharge tube (16,46).

15. Apparatus according to any one of the preceding claims, characterized in that it comprises at least one porous or microperforated body (18,48), connected to the discharge mouth of said at least one discharge tube (16, 46) and acting as a divider of the flow of pressurized air discharging from the said tube (16,46), which is broken up into a plurality of microbubbles.

16. Apparatus according to Claim 1, characterized in that it is supported on a floating support platform (P) which is stabilized by means of a mass of ballast (2).

17. Apparatus according to Claim 16, characterized in that it comprises a counterfloat (121), linked to the floating support platform (P) on the side thereof opposite that -from which said drive arm extends (119) with the float (120) of said apparatus (110), the function of which is to counterbalance, with respect to the ballast (2), forces applied to the platform (P) by the float (120) through said arm (119).

18. Apparatus according to Claim 1, characterized in that it is supported on a fixed point, such as for example a jetty or suchlike structure (MO).

19. Apparatus according to Claim 1, characterized in that it is supported on a fixed point, such as for example a support frame (l,60.1) anchored stably to the sea bottom.

20. Apparatus according to any one of the preceding claims, characterized in that said oscillating drive arm (19,32,49,66,119) is further provided in order, by its oscillating movements, to drive means for generating electrical current, such as a dynamo for example, for powering electrical means, for example signalling lights, connected to said apparatus.

Fig. 1

Fig. 2

Fig. 3

Fig. 4

Fig. 5

130

15    14

Fig. 6

16.1    16.2    14.1

17    11
12

15.1    13

15.2    119    120

16.3    12.1

119.1    15.3    A

131

119.2

16

18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 10, no. 185 (C-357), 27th June 1986; & JP-A-61 035 896 (FUTOSHI OKI) | 1-4 | C 02 F 7/00 <br> F 03 B 13/24 <br> F 03 B 13/18 |
| Y | PATENT ABSTRACTS OF JAPAN, vol. 5, no. 190 (M-100), 4th December 1981; & JP-A-56 113 059 (NAKAMURA EISHIN) | 1-4,18-20 | |
| Y | US-A-1 754 025 (LAWRENCE) <br> * Figures * | 18-20 | |
| A | US-A-3 268 154 (ARANYI) <br> * Figures * | 1 | |
| A | US-A-4 560 884 (WHITTECAR) <br> * Figures * | 1 | |
| A | PATENT ABSTRACTS OF JAPAN, vol. 8, no. 12 (M-269)[1449], 19th January 1984; & JP-A-58 174 168 (SABUROU TOU) | 1 | |
| A | PATENT ABSTRACTS OF JAPAN, vol. 13, no. 244 (M-834), 7th June 1989; & JP-A-01 053 070 (SHIRO KANESHIRO) | 1 | TECHNICAL FIELDS SEARCHED (Int. Cl.5) <br><br> C 02 F <br> F 03 B |
| A | PATENT ABSTRACTS OF JAPAN, vol. 7, no. 163 (M-229), 21st October 1981; & JP-A-58 070 066 (TOUHOKU DENRIYOKU) | 1 | |

The present search report has been drawn up for all claims

| Place of search | Date of completion of the search | Examiner |
|---|---|---|
| THE HAGUE | 16-10-1990 | KASPERS H.M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)